**Europäisches Patentamt**

**European Patent Office**

**Office européen des brevets**

(19)

(11) Veröffentlichungsnummer : **0 353 604 B1**

(12)

# EUROPÄISCHE PATENTSCHRIFT

(45) Veröffentlichungstag der Patentschrift :
**19.11.92 Patentblatt 92/47**

(51) Int. Cl.$^5$ : **C09K 17/00, C05D 9/00**

(21) Anmeldenummer : **89113748.1**

(22) Anmeldetag : **26.07.89**

(54) **Mittel zur Stabilisierung von Böden und Flächen.**

(30) Priorität : **31.07.88 DE 3825904**

(43) Veröffentlichungstag der Anmeldung :
**07.02.90 Patentblatt 90/06**

(45) Bekanntmachung des Hinweises auf die
Patenterteilung :
**19.11.92 Patentblatt 92/47**

(84) Benannte Vertragsstaaten :
**AT BE CH DE ES FR GB GR IT LI LU NL SE**

(56) Entgegenhaltungen :
**EP-A- 0 326 110**
**WO-A-79/00261**
**DE-A- 3 121 277**
**DE-A- 3 502 171**

(56) Entgegenhaltungen :
**US-A- 4 219 349**
**WORLD PATENT INDEX (LATEST), Woche 38,**
**Accession Nr. 86-248698, Derwent Publica-**
**tions Ltd, London, GB; & JP-A-61 176 501(NI-**
**HON TOKUSHU NOYAKU SEI)**
**Ullmann; Encyklopädie der Technischen Che-**
**mie, 4. Aufl., Band 6 (1981), 465-498**

(73) Patentinhaber : **Marx, Günther, Dr.**
**W-5431 Ruppach-Goldhausen (DE)**

(72) Erfinder : **Marx, Günther, Dr.**
**W-5431 Ruppach-Goldhausen (DE)**

(74) Vertreter : **Becker, Thomas, Dr. et al**
**Becker & Müller Patentanwälte**
**Eisenhüttenstrasse 2**
**W-4030 Ratingen 1 (DE)**

**Beschreibung**

Die Erfindung betrifft ein Mittel zur Stabilisierung von Böden und Flächen, die für einen Pflanzbewuchs bestimmt sind.

Hierzu gehört grundsätzlich jede Art von Grünflächen. Die Erfindung betrifft darüber hinaus insbesondere den Einsatz eines Stabilisierungsmittel für schwierig zugängliche Böden und Flächen beziehungsweise solche Böden und Flächen, die zum Beispiel durch Witterungseinflüsse oder mechanische Angriffe einer besonderen äußeren Belastung ausgesetzt sind. Beispielhaft seien in diesem Zusammenhang Böden auf Flachdächern von Gebäuden, Dämme an Kanälen und Seen Sportstätten rutschgefährdete Hänge oder dergleichen genannt. Mit Bezug auf diesen Anwendungsbereich wird die Erfindung auch nachstehend näher erläutert, ohne daß sie insoweit Beschränkungen unterliegt.

Zum Beispiel Uferflächen von Dämmen an Kanälen sind zum Teil einem beachtlichen Wellenschlag ausgesetzt, der immer wieder zu Unterspülungen der Böden führt. Böden auf Flachdächern sind häufig besonders starken Winden und anderen Witterungseinflüssen ausgesetzt.

Für beide Anwendungsbereiche wird die Forderung erhoben, daß die Böden einerseits strukturstabil sein sollen, um nicht durch Wellenschlag oder Witterungseinflüsse ausgewaschen und abgetragen zu werden; gleichzeitig sollen die Böden aber auch eine möglichst optimale Abführung insbesondere von Regenwasser ermöglichen.

Verdichtet man die Böden aber beispielsweise, um ihre Strukturstabilität zu erhöhen, verschlechtert man gleichzeitig die Dränagewirkung der Böden. Lockert man die Böden auf, kann zwar die Wegführung des Wassers verbessert werden, gleichzeitig verschlechtert sich jedoch die Strukturstabilität der Böden und sie können durch Winde, Hagelschläge oder dergleichen ausgewaschen werden.

Mechanische Angriffe wie durch Wellenschlag kommen hinzu, ohne daß bisher eine beiden Kriterien gerecht werdende Lösung gefunden werden konnte.

Man hat zwar versucht, zum Beispiel die Uferbereiche von Dämmen an Kanälen zumindest an der Oberfläche zu betonieren, um so eine Stabilisierung des Uferbereiches zu erreichen. Allerdings sind auch diese Maßnahmen größtenteils fehlgeschlagen, weil das Wasser auch den Betonmantel durch hohe Ablaufgeschwindigkeiten unterspült und anschließend das Erdreich wegschwemmt.

Um eine gewisse Strukturstabilisierung zu erreichen, werden die genannten Böden und Flächen häufig bepflanzt. Durch die Wurzelbildung der Pflanzen wird zwar eine gewisse Stabilisierung erreicht, die Praxis zeigt jedoch, daß die eingangs beschriebenen Nachteile dadurch nicht behoben werden und im Bereich des Wellenschlages völlig unwirksam sind.

Insoweit liegt der Erfindung die Aufgabe zugrunde, ein Mittel zur Stabilisierung von Böden und Flächen anzubieten, die für einen Pflanzbewuchs bestimmt sind, wobei das Mittel so ausgebildet sein soll, daß nach dem Ausbringen oberflächlich eine rasche extensive und intensive Begrünung ermöglicht wird, die die Strukturstabilität des Bodens sicherstellt und andererseits das Mittel so ausgebildet ist, daß gleichzeitig eine optimale Einstellung des Wasserhaushalts gewährleistet ist.

Die Erfindung steht unter der Erkenntnis, daß bestimmte gebrannte mineralische Stoffe auf Ton- und /oder Tonmineralbasis beide vorgenannten Kriterien erfüllen, sofern sie in bestimmter Weise aufbereitet worden sind und damit gezielte physikalische Eigenschaften aufweisen. Dabei kommt es vor allem auf zwei Dinge an:

- zum einen muß das Material eine möglichst hohe spezifische Oberfläche aufweisen, um den Pflanzen eine möglichst große Fläche zur Verfügung zu stellen, an denen sie sich anlagern und Wurzeln bilden können,
- zum anderen muß das Material ein möglichst großes offenes Porenvolumen aufweisen, wobei die Poren zum einen dann dazu dienen, Wurzelverästelungen zwischen den einzelnen Teilchen aufzunehmen und zum anderen gleichzeitig für eine Wasserspeicherung und -abfuhr (Dränage) sorgen.

Die Erfindung schlägt dazu in ihrer allgemeinsten Ausführungsform ein Mittel der eingangs genannten Art vor, das wie folgt gekennzeichnet ist:

- 30 bis 99,9 Gewichtsprozent einer gebrannten, stückigen mineralischen Komponente auf Ton- und/oder Tonmineralbasis mit einem Gehalt eines oder mehrerer Tonminerale aus der Gruppe Smektit, Kaolinit, Illit und/oder Serizit mit
- einen offenen Porosität von mindestens 30 Volumenprozent, vorzugsweise 50 bis 90 Volumenprozent, sowie
- einem mittleren Porendurchmesser zwischen 0,05 und 500 μm,
- 0,1 bis 2,0 Gewichtsprozent eines organischen Aktivators,
- Rest Füllstoffe.

Danach kann das Material zum einen ausschließlich aus der Kombination einer gebrannten stückigen mineralischen Komponente und eines organischen Aktivators bestehen. Überraschenderweise hat sich gezeigt, daß allein diese Kombination bereits die eingangs genannten Kriterien erfüllt. Das Mittel kann so zum Beispiel unter leichter Verdichtung ohne weiteres direkt auf eine Dachfläche aufgebracht werden. Die anschließende Bepflanzung erfolgt dann vorzugsweise durch Aufsprühen entsprechender Pflanzensamen in einer entsprechenden Suspension. Dabei sind Pflanzensubstrate bekannt, die pro Gramm über 1000 Samenkörner enthalten können. Die Samen gehen sofort an und bilden ein fein verteiltes, verzweigtes Wurzelgerüst, das sich unmittelbar an der hohen spezifischen Oberfläche des gebrannten Stoffes anlagert und somit unmittelbar zu einer mechanischen Verbindung der einzelnen Teile des gebrannten Materials führt. Innerhalb kürzester Zeit wird auf diese Weise ein strukturstabiler Boden erreicht, der gleichzeitig eine hervorragende Dränagewirkung zeigt, bedingt durch den extrem hohen Anteil offener Porosität sowie die Poren in einer Größenordnung zwischen 0,05 und 500 μm.

Der organische Aktivator, der nach einer vorteilhaften Ausführungsform der Erfindung ein hochpolymerer, biologisch stabiler Wirkstoff von Dauerhumuscharakter wie Polyuronsäure und deren Derivate ist, wird zuvor mit der gebrannten mineralischen Komponente vermischt, wobei der organische Aktivator vorzugsweise flüssig eingebracht oder aufgesprüht wird. Der organische Aktivator dient zur Beschleunigung der Wurzelbildung im Substrat durch stabilisierende Ton-Humus-Komplex-Bildung, was seinerseits wieder den Stickstoffanteil und Ionenaustausch im Boden günstig beeinflußt.

Beträgt der Anteil der gebrannten Komponente weniger als 99,9 bis 98 Gewichtsprozent (bei entsprechender Zugabe zwischen 0,1 bis 2,0 Gewichtsprozent des organischen Aktivators) wird im übrigen ein Füllstoff zugegeben, der entweder ein normaler Boden (Mutterboden) sein kann, der vorzugsweise aber aus einer ungebrannten mineralischen Komponente auf Ton- und/oder Tonmineralbasis mit einem Gehalt eines oder mehrerer Tonminerale aus der Gruppe Smektit, Kaolinit, Serizit und/oder Illit besteht.

Durch diese ungebrannten Tonminerale (Schichtsilikate) wird das Wasser- und Ionenanlagerungsvermögen zusätzlich begünstigt.

Durch eine Wasseraufnahme vergrößert sich das Volumen, gesättigt wirkt der Ton wasserstauend, so daß nicht nur eine Auflockerung der Böden und damit eine bessere Luft- und Wasserführung mit einem erfindungsgemäßen Mittel erreicht wird, sondern auch insoweit die Bildung von Ton-Humus-Komplexen gefördert wird.

In gleichem Maße wie vorstehend beschrieben gilt auch für dieses Mittel, daß es nicht nur eine hervorragende Dränagewirkung zeigt, sondern gleichzeitig auch in besonderem Maße für eine extensive und intensive Begrünung strukturstabil ist beziehungsweise wird, sobald Samen aufgebracht oder Pflanzen eingebracht worden sind. Auch in diesem Fall gilt, daß das Wurzelwerk der Pflanzen sich optimal im Porenraum der gebrannten und ungebrannten Tonmineralbestandteile verzweigen und verästeln kann und dadurch den Boden ingesamt stabilisiert, ohne ihn aber nennenswert zu verdichten. Die hohe spezifische (aktive) Oberfläche der mineralischen Komponenten bietet zwar eine Vielzahl von Bewuchs- und Verkettungsmöglichkeiten für das gebildete Wurzelwerk, die Wasseraufnahme und -abfuhr wird aufgrund des hohen offenen Porenvolumens des gebrannten Materials dadurch jedoch nicht beeinträchtigt.

Schon nach kurzer Zeit, nachdem die Bepflanzung stattgefunden hat, ist der Boden so strukturstabil, daß er sowohl Witterungseinflüssen als auch mechanischen Angriffen wie zum Beispiel einem Wellenschlag, wie er am Ufer von Kanaldämmen häufig beobachtet wird, ohne weiteres widersteht.

Die ungebrannte mineralische Komponente kann mit der gebrannten mineralischen Komponente zu einem Boden aufbereitet und ausgebracht werden, ebenso ist es aber auch möglich, zum Beispiel das gebrannte Material hoher offener Porosität als erste Schicht aufzubringen und darüber eine zweite Schicht aus der ungebrannten Komponente vorzusehen. Auch in diesem Fall wird aufgrund der hohen kapillaren Saugkraft der gebrannten, stückigen mineralischen Komponente die Dränagewirkung nicht beeinträchtigt.

Während die gebrannte Komponente vorzugsweise in einer Kornfraktion zwischen 1 und 20 mm vorliegen sollte, kann die ungebrannte mineralische Komponente sowohl in Pulver- wie Granulatform ausgebracht werden. Wie bereits oben ausgeführt, quillt das ungebrannte Material unmittelbar nach Wasserkontakt auf und unterstützt auf diese Weise die Strukturstabilität des Bodens. Gleichzeitig dienen die aufgeweiteten Tonminerale aber auch zur Aufnahme etwaiger Schadstoffe im Boden, wie nachstehend noch näher ausgeführt wird.

Der ungebrannten mineralischen Komponente kann auch ein Anteil eines mineralischen Düngers zugegeben werden.

Ebenso ist es vorteilhaft, die ungebrannte mineralische Komponente mit einem Gehalt eines das Ionenaustauschvermögen aktivierenden und/oder das Wasseranlagerungsvermögen regulierenden Stoffes zu versetzen, zum Beispiel einem Alkali, Erdalkali und/oder Humus und sonstige Salze enthaltenden Träger, vorzugsweise auf der Basis Kalk, Dolomit, Zeolith, Kalium-, Ammonium- und/oder Magnesiumsalze einzeln oder in Kombination.

Kalk dient hauptsächlich als Mittel zur Verbesserung des Reaktionszustandes (Erhöhung des pH-Wertes) und trägt später zur Entsäuerung der Böden entscheidend bei. Daneben bewirkt die Aufkalkung des Bodens aber auch eine Erhöhung der Wirksamkeit anderer Nährstoffe.

Es hat sich gezeigt, daß durch die Verwendung eines erfindungsgemäßen Mittels nicht nur - entsprechend den einzelnen Bestandteilen - eine Addition der einzelnen Einflußfaktoren zu beobachten ist, vielmehr wird der gesamte Nährelementkreislauf besonders auffällig gefördert, offensichtlich aufgrund eines synergistischen Zusammenwirkens der einzelnen Bestandteile und der aktivierten reversiblen Ionenaustauschkapazität. Das erfindungsgemäße Mittel wirkt kurzfristig, aber auch langfristig stabilisierend. Der Wasserhaushalt des Bodens wird in vorteilhafter Weise beeinflußt, so daß auch eine Rezirkulation der einzelnen Nährelemente günstig beeinflußt wird.

Dies gilt insbesondere beim Einsatz von Tonmineralgemischen.

Als besonders wirksam gelten die montmorillonitischen Tone. Insbesondere eignen sich aber auch serizitische und/oder illitische Tone, die mit ihrer eigenen mineralogischen und chemischen Zusammensetzung selbst wichtige Nährstoffe in den Boden bringen.

Durch Zugabe eines das Ionenaustauschvermögen aktivierenden Stoffes kann die Wirksamkeit dieser Komponente weiter erhöht werden.

Beim Einsatz der genannten ungebrannten mineralischen Komponente ist von besonderer Bedeutung aber ihre Kombination mit dem porösen gebrannten Stoff, insbesondere um die Anlagerungsflächen für das Wurzelwerk und den Wasserhaushalt zu optimieren.

In diesem Sinne wirkt auch ein Zusatz von Vulkangestein, Kalkstein, Mergel, Zeolith und/oder Dolomit vorteilhaft. Diese Zusätze bewirken, einzeln oder in Kombination, neben einer Anlagerung beziehungsweise Bindung von Schad- und sonstigen Stoffen vor allen Dingen auch eine optimale Wasseraufnahme und/ oder -abfuhr.

Die genannten physikalischen Eigenschaften des gebrannten mineralischen Stoffes lassen sich dadurch einstellen, daß die Tonminerale unterhalb der Sintertemperatur, aber oberhalb 650 Grad Celsius gebrannt werden. Durch eine Brenntemperatur unterhalb der Sintertempertur wird die Bildung geschlossener Poren gezielt verhindert. Mit steigender Brenntemperatur entsteht gleichzeitig aber auch ein freigelegtes SiO$_4$-Tetraedersystem, bei dem sich die Anzahl unabgesättigter Tetraeder mit steigender Brenntemperatur ändert und/oder teilweise zersetzte und/oder umgewandelte Tonmineralkomplexe (Skelette) (Metakaolin) die eine sehr hohe Reaktionsfähigkeit aufweisen, neu bilden.

Zur Erhöhung der kapillaren Saugkraft kann das Ausgangsmaterial vor dem Brennen auch mit einem Porosierungsmittel vermischt werden. Hierbei erfolgt bei den genannten Brenntemperaturen, abhängig von der Art und dem Anteil des Porosierungsmittels zur Förderung der Bildung offener Poren, vorzugsweise ein "langsamer", also schonender Brand, bei dem das Porosierungsmittel verhältnismäßig langsam verbrennt und die bei dieser Verbrennung entstehenden Gase zu einer allmählichen Ausformung verhältnismäßig kleiner, offener und statistisch verteilter Poren führen, wobei der Brennprozeß - wie oben ausgeführt - so geführt wird, daß vorwiegend offene Poren mit einem mittleren Porendurchmesser zwischen 0,05 und 500 µm entstehen die eine optimale kapillare Saugkraft und eine günstige Größe für mikrobiologische Umsetzungen aufweisen.

Der Anteil an Porosierungsmittel, zum Beispiel Sägemehl, Aluminium, Kork, Reisschalen oder dergleichen liegt vorzugsweise bei 5 bis 30 Gewichtsprozent, bezogen auf den Anteil der gebrannten mineralischen Komponente, wobei die Bereichsgrenzen für das Porosierungsmittel im wesentlichen durch das unterschiedliche spezifische Gewicht verschiedener Porosierungsmittel bedingt sind und für das relativ schwere Sägemehl beispielsweise eher ein Anteil von 20 Gewichtsprozent gilt, dagegen 5 Gewichtsprozent für beispielsweise Reisschalen oder Schaumkunststoffe.

Weitere Merkmale der Erfindung ergeben sich aus den Merkmalen der übrigen Unteransprüche sowie den sonstigen Anmeldungsunterlagen.

Die Erfindung wird nachstehend anhand eines Beispieles erläutert, das eine typische und besonders bevorzugte Zusammensetzung des erfindungsgemäßen Mittels zeigt.

Dieses besteht aus

- 30 bis 70 Gewichtsprozent einer gebrannten, stückigen, mineralischen Komponente auf Ton- und /oder Tonmineralbasis mit einem Gehalt eines oder mehrerer Tonminerale aus der Gruppe Smektit, Kaolinit, Illit und/oder Serizit mit

- einer offenen Porosität von 50 bis 80 Volumenprozent sowie

- einem mittleren Porendurchmesser zwischen 0,05 und 500 µm, und enthält weiter

- 70 bis 30 Gewichtsprozent einer ungebrannten, mineralischen Komponente auf Ton- und/oder Ton- mineralbasis mit einem Gehalt eines oder mehrerer Tonminerale aus der Gruppe Smektit, Kaolinit, Illit und/oder Serizit sowie schließlich

- 0,1 bis 2 Gewichtsprozent eines organischen Aktivators,

wobei die Summe der Einzelkomponenten 100 Gewichtsprozent beträgt.

Dabei liegt die gebrannte mineralische Komponente in einer Kornfraktion zwischen 1 und 20 mm vor und die ungebrannte mineralische Komponente wird in Pulverform (kleiner 1 mm) eingesetzt.

Das homogen aufbereitete Material wird anschließend in einer Stärke von 30 cm uferseitig auf den Damm eines Kanals aufgebracht und leicht verdichtet. "Leicht verdichtet" heißt dabei, daß die Verdichtung zum Beispiel durch einfaches Begehen erfolgt.

Anschließend wird ein flüssiges Samenkonzentrat auf den so ausgebildeten Boden aufgesprüht. Zuvor kann bei Bedarf das ausgebrachte Mittel noch befeuchtet werden.

Die Saat geht sofort an und bildet ein feines Wurzelwerk aus, das die einzelnen Bodenbestandteile untereinander verkettet und den Boden insgesamt strukturstabil macht, und zwar derart, daß auch ein üblicher Wellenschlag (zum Beispiel durch vorbeifahrende Schiffe oder Stürme) den Boden weder auswäscht noch unterspült.

Auch größere Niederschlagsmengen werden vom Boden ohne weiteres und spontan aufgenommen und abgeführt, wofür in erster Linie das hohe offene Porenvolumen der gebrannten mineralischen Komponente verantwortlich ist.


**Patentansprüche**

1.  Mittel zur Stabilisierung von Böden und Flächen, die für einen Pflanzenbewuchs bestimmt sind, mit folgenden Merkmalen :
    1.1 30 bis 99,9 Gewichtsprozent einer gebrannten, stückigen mineralischen Komponente auf Ton- und/oder Tonmineralbasis mit einem Gehalt eines oder mehrerer Tonminerale aus der Gruppe Smektit, Kaolinit, Illit und-/oder Serizit, mit
        1.1.1 einer offenen Porosität von mindestens 30 Volumenprozent, vorzugsweise 50 bis 90 Volumenprozent, sowie
        1.1.2 einem mittleren Porendurchmesser zwischen 0,05 und 500 µm.
    1.2 0,1 bis 2,0 Gewichtsprozent eines organischen Aktivators
    1.3 gegebenenfalls Rest : Füllstoffe.

2.  Mittel nach Anspruch 3, bei dem die Füllstoffe aus einer ungebrannten mineralischen Komponente auf Ton- und/oder Tonmineralbasis mit einem Gehalt eines oder mehrerer Tonminerale aus der Gruppe Smektit, Kaolinit, Serizit und/oder Illit bestehen.

3.  Mittel nach Anspruch 2, bestehend aus:
    3.1 30 bis 70 Gewichtsprozent einer gebrannten, stückigen mineralischen Komponente auf Ton - und/oder Tonmineralbasis mit einem Gehalt eines oder mehrerer Tonminerale aus der Gruppe Smektit, Kaolinit, Illit und/oder Serizit, mit
        3.1.1 einer offenen Porosität von mindestens 30 Volumenprozent, vorzugsweise 50 bis 90 Volumenprozent, sowie
        3.1.2 einem mittleren Porendurchmesser zwischen 0,05 und 500 µm,
    3.2 70 bis 30 Gewichtsprozent einer ungebrannten, mineralischen Komponente auf Ton- und/oder Tonmineralbasis mit einem Gehalt eines oder mehrerer Tonminerale aus der Gruppe Smektit, Kaolinit, Illit und/oder Serizit,
    3.3 0,1 bis 2,0 Gewichtsprozent eines organischen Aktivators,
        wobei die Summe der Einzelkomponenten stets 100 Gewichtsprozent ergibt.

4.  Mittel nach einem der Ansprüche 1 bis 3, wobei die gebrannte mineralische Komponente in einer Korngröße zwischen 1 und 20 mm vorliegt.

5.  Mittel nach einem der Ansprüche 1 bis 4, wobei die gebrannte mineralische Komponente in Pulver- oder Granulatform vorliegt.

6.  Mittel nach Anspruch 5, wobei das Granulat eine Teilchengröße zwischen 1 und 10 mm aufweist.

7.  Mittel nach einem der Ansprüche 1 bis 6, bei dem die ungebrannte mineralische Komponente einen überwiegenden Anteil eines oder mehrerer Tonminerale der Smektitgruppe enthält.

8.  Mittel nach einem der Ansprüche 1 bis 7, bei dem die ungebrannte mineralische Komponente einen Anteil eines mineralischen Düngers enthält.

9.  Mittel nach einem der Ansprüche 1 bis 8, bei dem die ungebrannte mineralische Komponente einen Gehalt eines das Ionenaustauschvermögen aktivierenden und/oder das Wasseranlagerungsvermögen regulierenden Stoffes in einer Menge bis zu 3 Gewichtsprozent, bezogen auf den Anteil der ungebrannten mineralischen Komponente enthält.

10. Mittel nach Anspruch 9, bei dem der Stoff aus einem Alkali, Erdalkali und/oder Humus und/oder sonstige Salze enthaltenden Träger auf der Basis Kalk, Dolomit, Kalium-, Ammonium- und/oder Magnesiumsalze einzeln oder in Kombination besteht.

11. Mittel nach einem der Ansprüche 1 bis 10 unter Verwendung eines Tonmineralgemisches aus Smektit Illit, Serizit und/oder Kaolinit.

12. Mittel nach einem der Ansprüche 1 bis 11, bei dem der organische Aktivator ein hochpolymerer, biologisch stabiler Wirkstoff von Dauerhumuscharakter wie Polyuronsäure oder deren Derivate ist.

13. Mittel nach einem der Ansprüche 1 bis 12, bei dem der Anteil des organischen Aktivators 0,5 bis 1,0 Gewichtsprozent beträgt.

14. Mittel nach einem der Ansprüche 1 bis 13, bei dem die gebrannte und/oder ungebrannte mineralische Komponente einen Anteil an Vulkangestein, mergeligem Kalkstein, Kalkmergel, Mergel, Tonmergel, mergeligem Ton, Zeolith und/oder Dolomit aufweist.

15. Mittel nach einem der Ansprüche 1 bis 14, bestehend aus:

15.1 30 bis 70 Gewichtsprozent der gebrannten mineralischen Komponente gemäß Merkmal 1.1 von Anspruch 1 in einer Kornfraktion zwischen 1 und 20 mm,

15.2 70 bis 30 Gewichtsprozent der ungebrannten mineralischen Komponente gemäß Anspruch 2 in Pulverform mit einem Smektitanteil von 60 bis 30 Gewichtsprozent bezogen auf das Mittel insgesamt,

15.3 0,5 bis 1,0 Gewichtsprozent des organischen Aktivators,

wobei die Summe aller Einzelkomponenten stets 100 Gewichtsprozent beträgt.

## Claims

1. Means for stabilizing soils and surfaces intended for plant growth, with the following features:

   1.1 30 to 99.9 percent by weight of a burnt, crumbled mineral component with a clay and/or clay-mineral base, and with a content of one or several clay minerals from the smectite, kaolinite illite and/or sericite group with

   1.1.1 an open porosity of at least 30 percent by volume, preferably 50 to 90 percent by volume and

   1.1.2 a mean pore diameter of between 0.05 and 500 µm

   1.2 0.1 to 2.0 percent by weight of an organic activator

   1.3 existing remainder: filler materials.

2. Means according to Claim 1, in which the fillers consist of an unburnt mineral component of clay and/or clay-mineral base with a content of one or several clay minerals from the smectite, kaolinite, illite and/or sericite group.

3. Means according to Claim 2, consisting of:

   3.1 30 to 70 percent by weight of a burnt, crumbled mineral component, with a clay and/or clay-mineral base and a content of one or several clay-minerals from the smectite, kaolinite, illite and/or sericite group with

   3.1.1 an open porosity of at least 30 percent by volume, preferably 50 to 90 percent by volume, and

   3.1.2 a mean pore diameter of between 0.05 and 500 µm

   3.2 70 to 30 percent by weight of an unburnt mineral component of clay and/or clay-mineral base and a content of one or several clay-minerals from the smectite, kaolinite, illite and/or sericite group,

   3.3 0.1 to 2 percent by weight of an organic activator,

in which the sum of the individual components always amounts to 100 percent by weight.

4. Means according to one of Claims 1 to 3, with the burnt mineral component present in a granule size of between 1 and 20 mm.

5. Means according to one of Claims 1 to 4, with the unburnt mineral component present in powder or granular form.

6. Means according to Claim 5, in which the granulate has a particle size of between 1 and 10 mm.

7. Means according to one of Claims 1 to 6, in which the unburnt mineral component contains a major portion of one or several clay-minerals from the smectite group.

8. Means according to one of Claims 1 to 7, in which the unburnt mineral component contains a portion of a mineral fertilizer.

9. Means according to one of Claims 1 to 8, in which the unburnt mineral component contains a content of a substance that activates the ion exchange capacity and/or regulates the water accumulating capacity, the content of which is up to 3 percent by weight in relation to the portion of the unburnt mineral component.

10. Means according to Claim 9, in which the substance consists of a carrier which contains alkali, earth alkali and/or humus and/or other salts of a base of lime, dolomite, kalium salts, ammonium salts and/or magnesium salts, individually or in combination.

11. Means according to one of Claims 1 to 10, using a clay-mineral mixture of smectite, illite, sericite and/or kaolinite.

12. Means according to one of Claims 1 to 11, in which the organic activator is a highly polymeric, biologically stable active agent of permanent humus character such as polyuric acid and its derivates.

13. Means according to one of Claims 1 to 12, in which the portion of the organic activator amounts to 0.5 to 1.0 percent by weight.

14. Means according to one of Claims 1 to 13, in which the burnt and/or unburnt mineral component has a portion of volcanic rock, margel-limestone, lime-margel, margel, clay-margel, margel-clay, zeolith and/or dolomite.

**15.** Means according to one of Claims 1 to 14, consisting of:

15.1 30 to 70 percent by weight of the burnt mineral component according to feature 11 of Claim 1, in a granular fraction of between 1 and 20 mm,

15.2 70 to 30 percent by weight of the unburnt mineral component according to Claim 2 in powder form with a smectite portion of 60 to 30 percent by weight in relation to the total means.

15.3 05 to 1.0 percent by weight of the organic activator,

in which the sum of all individual components always amounts to 100 weight percent.

**Revendications**

**1.** Produit pour la stabilisation de sols et de surfaces, conçu pour la croissance de plantes, présentant les caractéristiques suivantes :

1.1 de 30 à 99,9 pourcent en poids d'un composant minéral calciné, en morceaux, à base d'argile ou d'un minéral des argiles réfractaires, contenant un ou plusieurs minéraux des argiles réfractaires du groupe de la bentonite, kaolinite, illite et/ou serizite, avec

1.1.1 une porosité ouverte d'au moins 30 pourcent en volume, de préférence de 50 à 90 pourcent en volume, ainsi qu'

1.1.2 un diamètre moyen de pores compris entre 0,05 et 500 μm.

1.2 de 0,1 à 2,0 pourcent en poids d'un activateur organique,

1.3 le cas échéant, le reste : des matières de charge.

**2.** Produit selon la revendication 1, dans lequel les matières de charge sont composées d'un composant minéral non calciné, à base d'argile ou d'un minéral des argiles réfractaires, contenant un ou plusieurs minéraux des argiles réfractaires du groupe de la bentonite, kaolinite, illite et/ou serizite.

**3.** Produit selon la revendication 2, composé de :

3.1 30 à 70 pourcent en poids d'un composant minéral calciné, en morceaux, à base d'argile ou d'un minéral des argiles réfractaires, contenant un ou plusieurs minéraux des argiles réfractaires du groupe de la bentonite, kaolinite, illite et/ou serizite, avec

3.1.1 une porosité ouverte d'au moins 30 pourcent en volume, de préférence de 50 à 90 pourcent en volume, ainsi qu'

3.1.2 un diamètre moyen de pores compris entre 0,05 et 500 μm.

3.2 de 70 à 30 pourcent en poids d'un composant minéral non calciné, à base d'argile ou d'un minéral des argiles réfractaires, contenant un ou plusieurs minéraux des argiles réfractaires du groupe de la bentonite, kaolinite, illite et/ou serizite

3.3 de 0,1 à 2,0 pourcent en poids d'un activateur organique,

la somme des différents composants faisant toujours 100 pourcent en poids.

**4.** Produit selon l'une des revendications 1 à 3, où les composants minéraux calcinés se présentent en une taille granulaire comprise entre 1 et 20 mm.

**5.** Produit selon l'une des revendications 1 à 4, où les composants minéraux calcinés se présentent sous forme de poudre ou de granulat.

**6.** Produit selon la revendication 5, où le granulat présente une taille granulaire comprise entre 1 et 10 mm.

**7.** Produit selon l'une des revendications 1 à 6, dans lequel les composants minéraux non calcinés contiennent une partie principale formée d'un ou plusieurs minéraux des argiles réfractaires du groupe de la bentonite.

**8.** Produit selon l'une des revendications 1 à 7, dans lequel les composants minéraux non calcinés contiennent une partie formée d'un engrais minéral.

**9.** Produit selon l'une des revendications 1 à 8, dans lequel les composants minéraux non calcinés contiennent une substance activant la capacité d'échange ionique et/ou régulant la capacité d'accumulation d'eau, en une quantité allant jusqu'à 3 pourcent en poids, rapporté à la proportion des composants minéraux non calcinés.

**10.** Produit selon la revendication 9, dans lequel la substance est composée d'un alcali, d'un alcalino-terreux et/ou d'un humus et/ou d'autres supports, contenant des sels, à base de chaux, dolomite, sels de potassium, ammonium et/ou magnésium, individuellement ou en combinaison.

**11.** Produit selon l'une des revendications 1 à 10, utilisant un mélange de minéraux des argiles réfractaires, composé de bentonite, illite, sérizite et/ou kaolinite.

**12.** Produit selon l'une des revendications 1 à 11, dans lequel l'activateur organique est un haut-polymère, une substance biologiquement stable à caractère d'humus durable, tel que l'acide polyuronique ou ses dérivés.

13. Produit selon l'une des revendications 1 à 12, dans lequel la proportion de l'activateur organique est de 0,5 à 1,0 pourcent en poids.

14. Produit selon l'une des revendications 1 à 13, dans lequel les composants minéraux, calcinés et/ou non calcinés, présentent une proportion de pierre volcanique, calcaire marneux, marne calcaire, marne, marne argileuse, argile marneuse, zéolithe et/ou dolomite.

15. Produit selon l'une des revendications 1 à 14, composé de :

15.1 30 à 70 pourcent en poids du composant minéral calciné, selon la caractéristique 1.1 de la revendication 1, avec une faction granulaire comprise entre 1 et 20 mm

15.2 30 à 70 pourcent en poids du composant minéral non calciné, selon la revendication 2, sous forme pulvérulente, avec une proportion de bentonite allant de 60 à 30 pourcent en poids, rapporté à l'ensemble du produit,

15.3 de 0,5 à 1,0 pourcent en poids de l'activateur organique,

où la somme de tous les différents composants est toujours de 100 pourcent en poids.